# EUROPEAN PATENT APPLICATION

(11) **EP 2 284 404 A2**
(43) Date of publication of application: **16.02.2011**
(21) Application number: 10186329.8
(22) Date of filing: 19.06.2003
(51) Int. Cl.: F16B 1/00, F16B 5/07, F16B 19/00

(54) **Fixing and Release Systems**

(30) Priority: 19.06.2002 AU PS312302
(62) Divisional of application: 03729701.7
(71) Applicant: Telezygology Inc., Milsons Point, NSW 2061 (AU)
(72) Inventor: Rudduck, Dickory, Seaforth, New South Wales 2093 (AU); Sizer, Geoffrey David, Pymble, New South Wales 2073 (AU); Goldspink, Lachlan Richard, Paddington, New South Wales 2061 (AU)
(74) Representative: Bumke, Jakob Wenzel

(57) **Abstract**

A fastener suitable for use in a network of fasteners, the fastener including an address means to distinguish the fastener from the other fasteners in me network. The fastener may include a fastening element having a flexible beam and an engagement means: and actuating means attached to the fastening clement and including a material adapted to contract when activated; wherein the beam is moveable, upon contraction of the material, between an engagement position and a disengagement position.

## Description

### Technical Field

This invention relates to fixing and release systems. In some aspects, the invention represents an improvement in the fixing and release systems disclosed in International Patent Application No. PCT/AU99/00185 (published as WO 99/47819), the contents of which are imported herein by reference.

### Background Art

International Application No. PCT/AU99/00185 (referred to below as the International Application) disclosed several aspects of systems for fixing or releasing a first element and a second element. In one aspect, a fastener was adapted to releasably fix the first and second elements and included a locking means moveable by remote activation between a locked position and an unlocked position. There was no permanent material connection between the fastener and the remote activation means. A "material connection" was defined as a connection which had physical substance, i.e. substance made of matter, and excluded a connection made through energy.

Various examples of remote activation means were given. These included the use of magnetic attraction or repulsion, the use of high-frequency heating or radio frequency heating, the transmission of a message via radio or other waves, and so on.

It has now been found that certain "smart" materials may be adapted for fixing and release systems which have different features from the remotely activated systems referred to above and that such materials can have substantial advantages when applied as part of the invention described below.

Part of the motivation for the present invention was the desire to provide a fastener which is useful in assembly and also in disassembly. Disassembly is becoming increasingly more important with an increase in social pressure to recycle components, for example, those in mobile or cellular telephones. The invention is also based on the desire to provide a system of fasteners which can be part of an array, which can be individually addressable and which can enable an orderly, predictable way of accessing replaceable components in assemblies, for example, in order to remove a radio unit from a motor vehicle.

At least in some embodiments, the present invention finds a basis in the desire to utilise computer systems already established in many vehicles. One example of these is controller-area networking (CAN), in which modules communicate data on to a bus, usually requiring two wires; another example is the local interconnect network (LIN) bus, which uses a single wire and a single master/multiple slave configuration. The fasteners of the present invention may be useful in connection with these other "On Board Diagnostic Systems".

The smart materials with which this invention is concerned are those known as "shape memory" materials. Currently, the best known of these is a shape memory alloy, predominantly or wholly made of titanium and nickel, but which may also include other material, such as aluminium, zinc and copper. Such a shape memory alloy is capable of adopting one shape below a predetermined transition temperature, and changing to a second shape once its temperature exceeds the transition temperature. Conversely, when the shape memory alloy cools below the transition temperature, it is capable of adopting the first shape again.

While this invention encompasses use of the shape memory alloy referred to above, it is not limited to this material. It is contemplated that other suitable materials may exist now or may come into existence in the future which can be substituted for the shape memory alloy.

### Disclosure of the Invention

### First Aspect

In a first aspect, this invention provides a fastener which includes:
(a) a fastening element having a flexible beam and an engagement means; and
(b) actuating means attached to the fastening element and including a material adapted to contract when activated;
wherein the beam is moveable, upon contraction of the material, between an engagement position and a disengagement position.

The fastener of this first aspect of the invention may be made of any suitable material, including plastic or metal. The fastener may be made of a combination of materials.

The flexible beam should have flexural modulus which is sufficiently low to enable the actuating means to move the beam in the desired manner. However, the tensile strength of the beam should be sufficiently high that the fastener can fasten useful loads. Preferably, the material of the beam has sufficient fatigue strength to accommodate the desired number of locked/unlocked cycles.

When the beam is made of metal, this is preferably spring steel, a beryllium-copper alloy or a titanium-copper alloy. The beam may be machined, cast, moulded or formed in any desirable way. For example, the beam can be made of braided flexible cable.

The engagement means preferably takes the form of a projecting wedge which can key into a corresponding recess in a wall of an element. Other configurations are possible. For example, the engagement means may be a snap means, a rod for latching over a hook, or an aperture which can latch over a projection such as a peg. The engagement means may take the form of a dovetail on the beam fitting into an appropriate recess. The fastener of the invention can engage with an identical fastener, for example.

Preferably, the material, which contracts when activated, is a shape memory material as has been discussed above. Preferably, the shape memory material is a titanium-nickel wire which, when sufficient energy in the form of an electrical current is applied, heats to or above a temperature at which the material shrinks by about 4 to 5%. As will be seen from the discussion in connection with the drawings, below, on application of energy such as electrical energy in order to generate heat above a predetermined level, the flexible beam can be caused to bend away from the engagement position in which a first element is fastened to a second element, thereby releasing the elements. Conversely, if the shape memory material is permitted to cool below the transitional temperature, in some embodiments the beam may assume the engagement position and the elements may be fastened again.

In certain embodiments, once the shape memory material has caused the beam to move to the disengagement position, it can be maintained in that position for a desired length of time, possibly by being maintained in a "hold" state. Such a hold state may be established using less power (such as electrical current) than that required to move the beam from the engagement position to the disengagement position. This may be achieved, for example, by insulating the actuating means, for example, by maintaining an insulating tube around the actuating means. Such a tube may comprise or include Teflon or other insulation. If the insulation is suitable, the shape memory material may successfully maintain the beam in a disengagement position using an electrical current (or other energy), which is less than that required to move the beam to the disengagement position in the first place.

Another way to reduce the amount of energy required to maintain the beam in the "hold" state in this embodiment is to provide one or more barriers to interfere with air convection.

Shape memory alloy is known to require a relatively long time to cool - for example, as long as 4 to 5 seconds. If this is undesirable, the shape memory alloy may be covered with a heat sink material which can reduce cooling time. The use of materials such as rubber, silicone or polyurethane directly on a shape memory alloy can help reduce cooling time. This may, however, have a negative effect in increasing the amount of power required to heat the shape memory alloy. If Teflon tubing is used for insulation, as set out above, it may be desirable to place copper tubing over the Teflon tubing, since copper tubing is highly efficient at conducting heat away from the shape memory alloy and hence reducing cooling times.

The fastener of the invention may take the form of a monostable, bistable or multistable clip. As an example of a monostable clip, the flexible beam is resilient and the shape memory material takes the form of a titanium-nickel wire joining the flexible beam to a base. When the wire is heated to a sufficient temperature, shrinkage occurs and the resilient beam bends to accommodate the shrinkage. When the wire cools below the relevant temperature, it elongates. The bias of the resilient beam causes the monostable clip to resume the original position.

As a first example of a bistable clip, the beam has two stable positions, one holding the beam in the engagement position and the other holding the beam in the disengagement position. As a second example, the beam lacks any bias which would hold the beam in the engagement position. In either example, there may be two pieces of the titanium-nickel wire joining the flexible beam to the base. One wire is on one side of the beam and the second wire is on the other side of the beam. Each wire can be activated separately. When the first wire is activated, it shrinks and distorts the beam in one direction, to the disengagement position. The beam stays in that configuration when the wire cools. In order to move the fastener to the engagement position, it is necessary to activate the second wire by the use of suitable heat, so that the second wire shrinks and draws the fastener back to the first position. A bistable clip can be used in situations where it is desirable to maintain the disengagement position without having to maintain a supply of energy (such as heat).

In the case of a multistable clip, the actuating means is capable of moving the beam to a number of positions, for example, in incremental steps.

It is within the scope of the first aspect of the invention that the fastener may be locked in the engagement position, in the disengagement position or in any intermediate position. The locking means may be any suitable means known in the art. By way of example, the locking means may trap the beam or engagement means or may block the beam or engagement means from moving out of the locked position. This can be useful, for example, if the fastener of the invention is used to fasten a door.

In one embodiment, the material which contracts when activated is preferably in the form of a wire, forming a "backbone" to the beam. In another embodiment, the material may take the form of a strip. In either case, the material may run along most of the length of the beam or it may be fixed at or near the head of the beam and run at an angle. The material may be attached by any suitable means, including threading through an aperture or channel, screw attachment, moulding, coating, encapsulation within another material and so on.

Especially when the material is in the form of a wire, it may be convenient to attach the wire to a piece of non-conductive high tensile wire, such as nylon or Kevlar, so as to form a loop of the smart memory alloy wire with the non-conductive high tensile wire. Connection can take place by way of crimping. If the beam is provided with a hook at either end, the loop can be attached to the beam via the hooks, the crimping points serving as points for electrical wires to be soldered to the fastener for provision of power. Such fasteners may be produced by injection moulding in plastic or formed from metal with simple assembly in crimping the wire into a loop and clipping it into place. It is anticipated that the cost of such a fastener would be extremely low.

It is to be understood that the material which contracts when activated is not limited to wire or strips. By way of further non-limiting example, the material may be sprayed onto the beam by sputtering or other technique.

The energy to be applied to the material so that it may assume the disengagement position is preferably heat energy caused by application of an electric current. Other forms of energy may be suitable. In the case of heat energy generated by an electric current, this may be effected in any suitable way.

The fastener may be a discrete fastener or a linearly extended fastener which can provide a continuous engagement strip. In the case of the discrete fastener, terminals in the base of the fastener may be used to connect to an electric supply. In the case of the linear form of fastener, one or more buses may be incorporated in the fastener in order to transmit electrical energy along the length of the linear fastener. In a preferred embodiment, a metal wire lashing may connect one bus to another along the length of the fastener. The lashing may be integrated with the fastener.

The beam may be attached to or integral with a base. Preferably, the engagement means is located at the opposite end of the beam to the base.

The fastener of the present invention can be constructed in an extremely inexpensive way, compared to other forms of fasteners. For example, the fastener of the present invention can replace solenoids in many applications. The fastener of the invention may, at least in some embodiments, be regarded as a hybrid between latching and fastening. The invention is particularly useful in security situations, since all fixing can be inaccessible once the assembly is constructed.

It will be readily appreciated by one skilled in the art that in one embodiment the fastener of the invention can be constructed using only two parts, the fastening element with integrated beam and engagement means being one part and the actuating means being the other. This can have substantial advantages in not only requiring fewer parts but also less assembly, lower cost and greater reliability.

The fastener may fasten a first element to a second element and may be integral with, for example, the first element, or may be separate from it. It is an important aspect of this invention that it is possible to form the fastener integrally with or from the element. For example, the fastener can be integrally moulded into a product casing, or formed from the edges of a metal panel.

The first element and the second element can each be chosen from a wide range, as was the case with the International Application. Also, as was the case with the International Application, there may be more than two elements which are fixed or released. For example, one first element may be fixed to or released from a plurality of second elements; a plurality of first elements may be fixed to or released from a single second element; or a plurality of first elements may be fixed to or released from a plurality of second elements. Further, where there is a plurality of elements, these need not be identical. A plurality of first elements may differ from one another; a plurality of second elements may differ from one another.

The fastener of the invention may be of one or more parts and may be integrated with one of the elements it is intended to fasten, or it may be attached to such an element by adhesive, by snap-fit or by other suitable means.

The fastener of the present invention is capable of application in a wide number of industries. For example, the fastener of the invention can be used to retain glass in a window or a panel within a frame or on a support. Using the fastener of the invention, there need be no fastening means visible externally. The window or panel can be secure in that it may not be released unless the fastener is caused to adopt the disengagement position. Thus, the fastener can fix a first element (the pane of glass or the panel) to a second element (the window frame or other frame). Another example is the fixing of a building panel to an underlying infrastructure, such as a stud.

In these embodiments, the fastener of the invention can take the form of one or more discrete locking points or a continuous locking point, such as in the linear form of the fastener. Multiple locking points can give added security, for example, in locking a window.

The fastener of the invention is eminently suitable for use in situations where tampering or wandalising is to be prevented or discouraged. As one example, light fittings in public conveyances, such as trains, can be secured by the fastener of the invention. These can replace the need for tamper-proof screens and other unsightly barriers. Other examples are as follows: access panels in buildings, for example, for alarm systems, safety equipment and so on, covers for lights in buildings, covers for traffic lights, phone boxes and parking meters and enclosures for signage systems, such as at bus shelters and on shop fronts.

If exposed to external elements, it may be preferred to include a seal or insulating material in the assembly, in order to protect the fastener from undesired temperature fluctuations.

When the energy applied is an electric current, this may be sourced from a normal power supply or provided by a discrete power supply, such as a battery. Thus, the fastener of the invention can be used to fix, for example, a first element being a closure, to a second element, being a receptacle, such as a bottle. In this embodiment, the power may be supplied by a battery within the closure, or by power supplied externally from a separate power source.

The fastener of the invention can be adapted to a wide range of applications.

As one example of use of the fastener of the invention, the fastener can close a flap on a mailbox, for example, being one of an array of mailboxes in a home unit building. In this case, insertion of an electronic access card may be required to authorise a supply of power to the fastener to cause it to be activated and allow the flap to be disengaged from the mailbox, permitting access to the mailbox.

The fastener of the invention can be relatively small in size: this contributes to its usefulness in a wide variety of situations.

A significant application for the fastener of the invention is in holding together the casings for products, allowing disassembly. It has already been set out above that disassembly is becoming increasingly more important, especially in connection with product recycling. The fasteners of the invention can provide a simple and relatively inexpensive system for assembly and disassembly. For example, consider a two-part plastic casing. One part may be relatively simple, forming a lid, while the other part may contain the fasteners of the invention and the supporting electronic system.

As a more sophisticated example, the fasteners of the invention may be embedded into the product itself, to allow parts and subassemblies of the product to be removed on command. Like materials can be removed at the same time. Parts can be removed in an efficient sequence. Parts and subassemblies can be recovered quickly and without damage.

The fastener of the invention can have particular application in relation to other types of assembly and disassembly. For example, the assembly and disassembly of vehicles is usually complex. If it is desired to replace a part, often it is necessary to undergo a complex series of steps in order to access the part to replace it. Using the fastener of the present invention, especially in addressable form, it can be possible to greatly simplify the disassembly procedure by releasing only those fasteners which need to be released in order to access the part in question. For instance, if it is desired to exchange a radio mounted in the dashboard of a vehicle, if appropriate addressable fasteners of the invention are used, the process can be operated via a relatively simple computer, such as a palm-sized computer programmed with the address of the appropriate fasteners. Data can be transmitted via hard wiring or by other means, such as infra-red transmission in order to cause release of the fastener in any suitable manner. Only the relevant fasteners in the dashboard fascia need to be released in order to remove the radio. The process can be reversed for reassembly.

The fastener of the invention can be particularly useful in the building industry and in connection with large buildings which tend to have embedded "intelligence". For example, if data buses (wired or wireless) run through a building, the fastener of the invention can be included in appropriate networks for a myriad of fastening applications. Even access to the intelligence system itself can be secured by use of the fasteners of the invention. For example, the need to have lockable, sealed or tamper proof screws can be eliminated because the fastener of the invention can be inaccessible after fixing has taken place and can be designed for release upon a suitable command and energy application controlled by the building's intelligence. On a more local scale, access to an area protected by a fastener of the invention can be effected via a key pad which can deliver the appropriate instruction to the power source which can then cause the fastener to deform and thus release.

The fastener of the invention, in intelligent form, can be used to enhance quality control and speed of assembly, as well as to provide controlled disassembly. While this aspect of the invention has application in a large range of areas, it is described herein in relation to a convenient example - that of vehicle assembly. Because the intelligent fastener of the invention can be addressable, individually or in groups, and in a programmed way, it is possible to replace a defective part or change a chosen option on a vehicle during assembly; the assembly line is no longer constrained in the manner presently known. As a simple example, once "options" are chosen on a motor vehicle and installed, it is usually impossible to change the chosen option - for example, by substituting a CD player for a radio in a vehicle. The present invention enables such an exchange to take place because it is not necessary to undergo the tedious disassembly required under prior art procedures. When the intelligent fastener of the present invention is used in the construction of the relevant part of the vehicle, the part (such as the radio) can be easily changed by instructing the release of only the relevant fasteners. The instruction can be embedded in software which can be carried in a portable or other computer, for example.

Not only does this type of construction have wide ramifications for assembly lines, but it also provides security, as already mentioned, since (in this example) the car radio or CD player cannot be removed from the vehicle without having the necessary instructions conveyed to the fastener to release the part. This also has ramifications in that, because assembly and disassembly can be far more computerised than at present, intensive education is not required and skilled labour can be reduced.

In the maintenance and repair industry, the fastener of the invention can have decided advantages. As already mentioned, vehicles are being constructed with local computer networks. This existing technology can be easily adapted to accommodate the intelligent fastener of the present invention. Consequently, it is contemplated that when, for example, a headlight bulb in a vehicle needs replacing, all one will require is an access code (which can be imprinted on the correct replacement part), which can be entered into a suitably programmed computer, such as a palm-sized computer, which will then direct the user as to the steps to be taken and address the necessary fastener, causing their release by the input of appropriate energy. Reassembly can similarly be computer directed.

As an alternative, a vehicle or other assembly could be constructed so that, if a part failed, the fastener holding it in place would be automatically released for access, so that the part could be replaced.

An important aspect of the fastener of the present invention is that it may be very simple, as well as inexpensive. Because of this, it is feasible to use the fastener of the invention in a "redundant" way. Redundancy can improve reliability by replicating one or more parts of the fastener any number of times. A redundant configuration can ensure that if any element fails, a redundant element can continue to enable the function of a fastener to be fulfilled. This is particularly significant in systems where there is a number of fasteners of the invention, such as the "intelligent" fastening systems described in greater detail below.

The fastener itself may have inbuilt redundancy. For example, if the actuating means is a wire, the fastener may contain two such wires, either of which is able to operate the fastener. If one wire fails, the other can perform the necessary function in moving the beam.

There is another way in which the fastener of the invention can be used in a redundant system. By way of example, the International Application refers to remotely activated locking means in a fastener. An assembly could be made with two types of fastener available to fix or release a first element and a second element. One type of fastener could be the remotely activatable type referred to in the International Application. The second type could be the fastener of the present invention. In this example, normally, fixing and release would be effected via the remotely activated fastener. However, in case of any failure, fixing or release could be effected via the fastener of the present invention.

As another example of redundancy, identical fasteners of the invention may be provided in duplicate, with either fastener being able to function singly as the fastener in the system. If the first fastener fails, the second, identical fastener is available to perform its function.

As an example of "double redundancy", two separate fasteners of the invention may be provided, each of which singly is able to perform the fastening function. Each fastener has duplicated actuating means, either of which is able to move the beam. This configuration could withstand a single failure of a fastener or a single failure of an actuating means, and some combinations of two or more failures.

The fastener of the invention may be "intelligent" or "not". As an example of a fastener which has no intelligence, reference is made to instances of the fastener referred to above, where the energy required to convert the shape memory material may be derived from a switched bus, for example. The intelligent version of the fastener of the invention is preferably addressable. In this instance, the fastener will require a supply of energy (such as power) together with a supply of data. The fastener can be made in an intelligent form, for example, by including an embedded switch and processor. This permits the addressing of the fastener, on an individual basis, or as part of a group, for switching or release of a part. It will be readily appreciated that this form of "smart clip" has multiple application in a large variety of areas. It is eminently suitable for environments which already have power and, possibly, data provided. It may be used for latching, particularly where multiple diverse points are required, such as around a door perimeter or in the case of mailbox arrays as discussed.

In connection with addressability of the fastener, on an individual basis, or as part of a group, it will be appreciated that this enables a plurality of fasteners to be activated in a chosen sequence. Consequently, one or many elements can be released in a chosen sequence and, likewise, elements can be fixed together in a chosen sequence.

The fastener of the invention may be part of network. Such a network may be spread throughout a building, or throughout a motor vehicle or aircraft, for example. A plurality of the fasteners may be connected to a central data processor/programmable solid state switch which, when fed with suitable data, causes one or more of the fasteners to receive the required amount of power to release one element from another element. In such a network, each fastener may be activated individually or in smaller or larger groups.

As well as providing a fastening function, the intelligent form of the fastener of the invention may have a second function which makes use of the intelligence and switching capacity of the fastener.

A simple example is a vehicle which has several of the fasteners of the invention in intelligent form. The fasteners have a first function which enables the fixing and releasing of light bulbs in the vehicle. The fasteners have a second function, which is to sense the amount of ambient light and to turn the light bulbs on or off depending on the amount of light sensed. One group of such fasteners may be adapted to turn on or off parking lights for the vehicle. Another group of the fasteners may be adapted to turn on or off the headlights. Data as to the amount of ambient light sent to a central processor activates the first fastener or the second fastener or both, according to desired criteria as to automatic switching on of the chosen lights.

When the fastener of the invention is part of a network, the network may be constructed in any suitable manner. Preferably, the network forms a star or a daisy chain. When the network forms a star, a power switch or processor is located in the center of the star, with each of the fasteners being separately connected to the central power switch/processor. In the case of a daisy chain, the connectors are arranged in a series, with a power source in the chain. Optionally, a data feed may also form part of the chain, using the power cable or separate data cables.

Especially in the case of the network of fasteners, the fastener may include a sensor able to convey information as to the condition of the fastening element and the actuating means, including sensing the current state of the fastening element (engaged or disengaged), sensing to allow optimised control of the application of energy to the actuation means and sensing in order to report performance, degradation or impending failure of the fastening element or actuation means.

A sensor may operate in a number of ways, such as by use of one or more limit switches which may employ electrical contact, magnetic, optical, capacitive or any other suitable sensing mechanism, to sense the current fastener condition (i.e., open, closed, intermediate or any one of a number of stable positions). Another example is one or more strain gauges or equivalent strain sensing devices which are installed on or in association with the fastener to sense position and condition and, having high levels of resolution, which can allow fine position determination and control. As another example, force sensors or force sensing devices may be installed on or associated with the fastener, in order to sense the force exerted on or by the fastener, and the condition of the fastener, with high levels of resolution and once again allowing fine position determination and control. Proximity sensors or equivalent positioning sensing devices may be used to sense the position of the fastener. Temperature sensors or equivalent temperature sensing devices can be used to sense the temperature of the fastener and, depending on the fastener type, these may be used to optimise control of the fastener and to sense condition of the fastener. Other examples of sensors will be apparent to one skilled in the art.

As well as enabling reports as to fastener position and condition to other areas of a network system, sensors may be used to optimise fastener control operations. Non-limiting examples are as follows.

In a first example, sensors in the form of limit switches are used to sense movement of the beam to the disengagement position. Power is supplied at a high level to the actuating means until the disengagement position is reached, whereupon the limit switches report this position. At that stage, power can be reduced to a lower level, being still sufficient to sustain the fastener in the disengagement position. Operating time, energy consumption and heating is minimised.

In a second example, a strain gauge is attached to the beam. Power can be applied at a high level to the actuating means until the beam is deflected to the disengagement position. Detection of this position by the strain gauge enables the power to be reduced to a lower level, once again being sufficient to sustain the fastener in the disengaged position, but at the same time minimising operating time, energy consumption and heating. In addition, analysis of the degree of bending of the beam as a function of applied power and time will allow degradation of the beam to be detected and signal the need for replacement prior to complete failure.

As a variation on the second example, there may be two strain gauges on the beam, one on either side. Differential measurement allows the beam position to be determined throughout its travel, with high resolution. Common mode measurement can allow linear extension or compression of the beam to be measured and hence axial loading on the beam to be determined.

As a third example, sensors may sense the contents (or lack of contents) of fastened elements and provide an appropriate response. For example, if the elements joined by the fastener are pipes, a sensor may sense presence of fluid in the pipe and refuse to disengage the pipes, even if given a command to do so. Similarly, the sensor may sense electrical current in a cable joined by the fasteners and refuse to disengage if to do so would cause a dangerous situation.

In a further example, the sensor may be a local temperature probe, which can sense ambient temperature and report to an embedded processor. The processor could then calculate and distribute the appropriate amount of power required to activate the actuating means. Shape memory alloy is usually activated by a pulse of power, for example, a 150°C pulse of power. This works well if the ambient temperature is in the range of -50°C to 75°C. However, if the ambient temperature is high, such as over 75°C, the 150°C pulse of power may cause the shape memory wire to overheat. Consequently, the sensor, having sensed the ambient temperature, can enable the processor to work out and distribute the appropriate amount of power to the fastener, increase the operating temperature window of the system at lower ambient temperatures, or save power if the ambient temperature is already relatively high.

### Second Aspect

In a second aspect, the invention provides a fastener for use in a network of fasteners, the fastener including an address means to distinguish the fastener from the other fasteners in the network. The second aspect of the invention also provides a network of such fasteners, referred to below as a "system".

The fastener may be the fastener according to the first aspect of the invention or any other suitable fastener. One example is the bolt assembly forming subject of Australian Provisional Patent Application No. 2002953616. Another example is the fastener forming subject of Australian Provisional Patent Application No. 2003901352. The content of both specifications is imported herein by reference.

The address means is intended to enable a network system to identify the fastener, for the purpose of establishing communications and addressing commands, such as a command to cause activation of actuating means.

The fastener may have actuating means which is any suitable actuating means and which will depend to a large extent on the nature of the fastener. Examples of actuating means are as follows: magnetic (linear solenoid), magnetic (rotary solenoid), magnetic (linear actuator), magnetic (motor), piezo-electric, electrostatic, thermal (shape memory alloy), thermal (bimetallic), thermal (state change), pneumatic, hydraulic, chemical, pyrotechnic or explosive, acoustic or ultrasonic, ionising radiation, ionising particles, luminescent and gravitational.

The address means may be any suitable means but preferably is capable of storage in a non-volatile manner, in order to resist corruption and intentional or unintentional overwriting or reprogramming. It is also preferred that the address means does not enable more than one fastener to have the same identity, unless there is requirement for a replacement fastener to assume the same identity as the original fastener being replaced.

By way of non-limiting example, the address means may comprise a serial number, a communications address or a temporary communications address, or any combination of these.

When the address means is a serial number, this is preferably a unique number which is programmed into the fastener as part of the manufacturing process and which consequently does not change throughout the life of the fastener.

When the address means is a communications address, this is preferably a communications or network address which may be assigned to the fastener at the time of installation, or when the network is configured.

When the address means is a temporary communications address, this is an address which may be assigned to the fastener on a transient basis. This may be desired, for example, where the fastener is configured in a sub-network and use of the full, unique address of the fastener during a particular session will cause excessive communications traffic and/or require excessive processing overhead during the communication session.

The address means may enable the unique identity of the fastener to be stored in any suitable way, and in any suitable storage device. Preferably, the storage method is robust and uses known techniques, such as multiple redundant storage with checksum or CRC protection, reinstatement of backups on detection of errors, etc. Preferably, the storage method includes measures to prevent unauthorised access or tampering with the unique identity.

Examples of storage devices are following:
Hardwiring: this includes switches, jumpers, solder blobs and soldered links.
Non-volatile memory: this includes PROM (programmable read only memory), EPROM (erasable programmable read only memory), EEPROM (electrically erasable programmable read only memory). Flash memory, battery backed random access memory (RAM), ferromagnetic RAM and optical storage. Storage of the unique identity may be combined with the operating program code of a microcontroller.
Semiconductor: storage in this form can incorporate the unique serial number programmed during manufacture and capable of being read by a microcontroller.

The address or identity of the fastener may be encrypted. There are many forms of available encryption techniques which may be suitable to the present invention. By way of example, the following are mentioned.

The first example is link encryption, where each communications link in which the information may be intercepted is protected by encryption of information on that link. Information may appear unencrypted or "in the clear" at communications or control nodes, and may need to be protected by other means, such as physical access control - discussed further below - at those points.

The second example is end-to-end encryption, in which information is encrypted at its source and decrypted at its destination and does not appear "in the clear" at intermediate points in the communications links.

As a third example, both end-to-end encryption as well as transmission over individually encrypted links may be used to result in a hybrid system.

In relation to physical access control, it may be desirable to incorporate further security measures to prevent unauthorised access to a system or network of fasteners of the invention, especially where there is a high level of need to prevent any unauthorised party to control fasteners, change system settings or configurations or cause damage or disruption to the system for any reason. By way of example, fasteners may attach valuable items to a vehicle or attach a door to its surround so as to lock the door. Obviously in such circumstances unauthorised operation of the fasteners could allow theft of the valuable items or intrusion through the door to occur.

While file encryption is one way to prevent unauthorised entry into a fastener system, there are other ways of controlling access. Some non-limiting examples are set out below.

Physical access to a system and its elements may be prevented by physically isolating the system or making it difficult to locate. For example, wiring for the system can be disguised within the loom of a vehicle. As another example, spread spectrum wireless communication techniques can be used to hide radiated signals amongst radio noise. Use of spread spectrum wireless links or other communications methods, such as optical fibres, can make it difficult to intercept, modify, disrupt or jam commands or communications to the system.

By way of further example, secure methods of identification may be used. For example, biometric information techniques may be used to identify authorise personnel and/or systems. Electronic security certificates may be required to authorise access by computer based systems. Valid access may require confirmation by personnel or systems by a bi-directional handshake and identity confirmation process, or by such measures as call-back to an authorised telephone number or a network address, for example.

By way of further example, access to and control of fasteners may require the operator or control system to take part in a dialogue with a master control/database for a specific access code, in order to allow control of the fastener. As well as such explicit authorisation there may be tracking of the transaction. For example, the access code and fastener operation may be recorded in a time stamped log stored by the master control/database, by the fastener itself or by intermediate system elements. Retrieval of such logs can permit analysis for audit tracking purposes.

In the system of the invention, each activating means may actuate one or more fastening elements. The system preferably includes a control means for controlling actuation of the actuating means, typically by energy from an energy source. Each control means may control one or more of the actuation means.

It is further preferred that the system of the invention includes an intelligent controller device for controlling the control means, and, through it, the actuating means, typically in response to an external stimulus. Each intelligent controller device may control one or more control means.

Also, in this system of the invention, it is preferred that there is an energy source for providing energy to the actuating means. The energy source may include local storage of energy such as in a battery, or externally applied energy, or a combination of both.

The system may include a sensor, which has already been discussed above and which also applies to the second aspect of the invention. The system may further include an external sensing means for determining and reporting the condition of external elements, for example, relating to an element which is engaged by the fastener and the engagement condition.

The system may include status indication means (such as an LED or an audible signal), to indicate the current condition of the fastener or the external sensing means and/or any other aspect of the system.

Further, the system may include communication means for enabling an external device or system to communicate with the fasteners of the invention in the system, both for control and for status reporting functions.

In one preferred embodiment, the system of the invention includes one or more fasteners of the invention together with one or more control means, one or more sensors, an energy source, an intelligent control device, a status indicator and an external sensing means.

In an expended form of the system, a plurality of fastener systems as per the last mentioned preferred embodiment is networked with one or more optional communications concentrators, one or more intelligent control units and one or more master control/database units. Examples of these are given below in connection with the drawings.

It will be appreciated that the invention in its various aspects set out above has particular application areas for product assembly, product disassembly, product recycling, product servicing and maintenance.

In relation to product assembly, disassembly and product recycling, application of the invention in its various aspects is most useful for products which already incorporate electronics, such as mobile phones, computers, LCD screens, televisions, white goods, and audio equipment. The invention is also useful in relation to automobiles, for example in connection with exterior trims and accessories, interior trims, air conditioning units, sound systems and auto-electrical subassemblies.

In relation to product servicing and maintenance, the fasteners of the invention can provide faster and more secure (because authorised) access to parts and subassemblies of products or equipment for the purposes of repair, replacement or maintenance. The fasteners can provide a significant saving in labour, since they can reduce the average time for repair. They can also provide a cost effective and secure method of access to internal components.

The fasteners can reduce the need for skill, because the process of assembly and disassembly can be directed by a computer.

Areas of application for product servicing and maintenance include those of computer components - for example, fastening a CD drive or a mother board to a housing; printer cartridges; retaining batteries - for example, on a power drill; automobile parts - for example, radio, air conditioning, interior panels, fuel cap release; and access panels on machinery and other equipment, such as forklifts.

Further application may be for access to "public equipment". This has already been discussed and examples given of access panels in buildings, covers for lights, signage systems, etc.

The fasteners of the invention may also provide relatively inexpensive electronic locks. The fasteners can be manufactured at a very low cost compared to solenoids or other conventional means of electronic locking. As a result, it may now be feasible to provide electronic locking, whereas, before now, cost would have been a prohibiting factor. Examples are: mailboxes, windows, cabinets, medicine cabinets and tool boxes. It will be recalled that the use of fasteners of the invention for electronic locking with such products can also provide for additional benefits of an intelligent system, which can report on history of access and activation by environment and which can also allow for encryption.

### Third Aspect

Reference has been made above to assembly line procedures. It will appreciated by one skilled in the art that the present invention is capable of overcoming bottleneck problems which can reduce the speed of assembly or, in severe cases, hold up the assembly line. The present invention provides a system for controlling a process of assembly for producing products and this forms an aspect of the present invention.

Accordingly, this invention provides, in a process for producing product, the process including a plurality of steps in which a first element is releasably fixed to a second element, the use of the fastener of the present invention to releasably fix the first element and the second element. In the method of the invention, it is preferred that most, if not all, of the fixing is carried out by means of the fasteners of the invention.

The invention also provides a computer system programmed to perform the process of the invention. As indicated above, the computer system can include hardware and/or software. The hardware can be designed to be plugged in to a suitable port in the assembly, or parts of it. Alternately, the hardware may be designed to transmit data in a wireless manner, as is known in the art.

The software preferably includes input data relevant to the location and function of each programmable fastener and interrelationship of the fasteners with each other, as well as means for enabling the computation of the most efficient manner of release of the fasteners to achieve a purpose. The system also preferably includes output means to guide, question or instruct a user in order to achieve the desired purpose. The system also preferably includes means for activating the relevant fastener of the invention.

It will be appreciated that the system of the invention requires the software to be able to interact with the relevant fastener and optionally cause activation of the fastener. Optionally, the system of the invention can first diagnose a problem and report on it.

### Brief Description of the Drawings

The invention in its various aspects will now be described in connection with certain non-limiting examples described in the attached drawings. In the drawings:
Figures 1 and 2 show in side view a simple form of a first embodiment of the first aspect of the fastener of the invention;
Figure 3 shows part of the fastener of Figures 1 and 2;
Figures 4 and 5 show a second embodiment of the first aspect of the fastener of the invention;
Figures 6 to 8 show a third embodiment;
Figures 9 to 12 show a fourth embodiment;
Figures 13 to 15 show a fifth embodiment;
Figures 16 to 18 show a sixth embodiment;
Figures 19 to 21 show a seventh embodiment;
Figures 22 to 24 show the embodiment of Figures 19 to 21 formed from an element;
Figures 25 to 27 show an eighth embodiment;
Figures 28 and 29 show a ninth embodiment;
Figures 30 to 34 show the ninth embodiment of Figures 28 and 29 in situ;
Figure 35 shows a linear form of an embodiment similar to that in Figures 1 to 3;
Figures 36 and 37 show the embodiment in Figures 9 to 12 in situ;
Figure 38 shows a tenth embodiment;
Figures 39 and 40 show an eleventh embodiment;
Figures 41 to 43 show a twelfth embodiment;
Figures 44 to 47 show a thirteenth embodiment;
Figures 48 and 49 show an embodiment similar to that in Figures 44 to 47;
Figures 50 and 51 show a further embodiment of a fastener with redundancy;
Figures 52,53,54 and 55 show an embodiment used for engaging a door and with the ability for locking the door;
Figures 56 to 61 show a different embodiment of the fastener of the invention used for door locking;
Figures 62 and 63 show an embodiment of the fastener in connection with limit switches;
Figures 64 and 65 show an embodiment of the fastener with a strain gauge;
Figures 66 and 67 show an embodiment similar to that in Figures 64 and 65 but with two strain gauges.
Figures 68 and 69 show an embodiment in connection with actuating mechanisms;
Figures 70 and 71 show a further embodiment in connection with actuating mechanisms;
Figure 72 is a block diagram of an embodiment of a fastener according to the invention;
Figure 73 is a block diagram for operating fasteners in a redundant system;
Figure 74 is a block diagram showing a network of fasteners;
Figure 75 is a block diagram showing a form of encryption.
Figure 76 is another block diagram showing a different form of encryption;
Figure 77 is a block diagram dealing with address means; and
Figure 78 is a block diagram relating to use of fasteners and network of the invention in a motor vehicle.

### Detailed Description of the Drawings

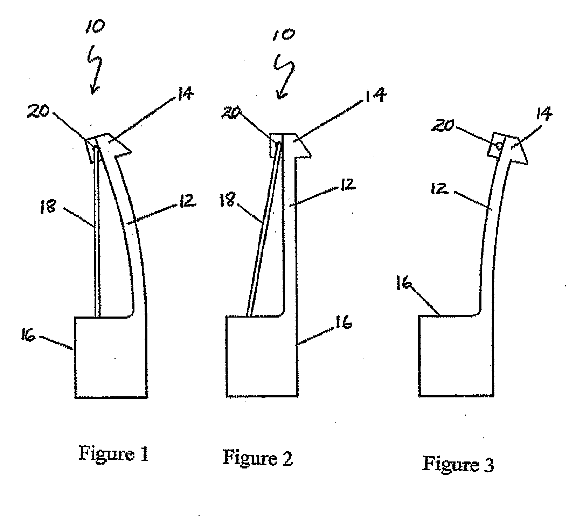

Referring first to Figures 1 to 3, this embodiment is made of molded plastic and the actuating means is a smart memory alloy wire. The fastener 10 is shown in side elevation and has, formed integrally, flexible beam 12 having at one end engagement means 14 and at the other mounting block 16. Shape memory alloy wire 18 forms a loop passing through channel 20, with both ends of the loop secured in block 16. This fastener is provided in a pre-cambered form, as illustrated in Figure 3. When wire 18 is attached, the correct tension is provided to wire 18, as shown in Figure 2, where fastener 10 is in the engaged position. Figure 1 shows the disengaged position, after wire 18 has contracted. This embodiment could also be made from moulded metal.

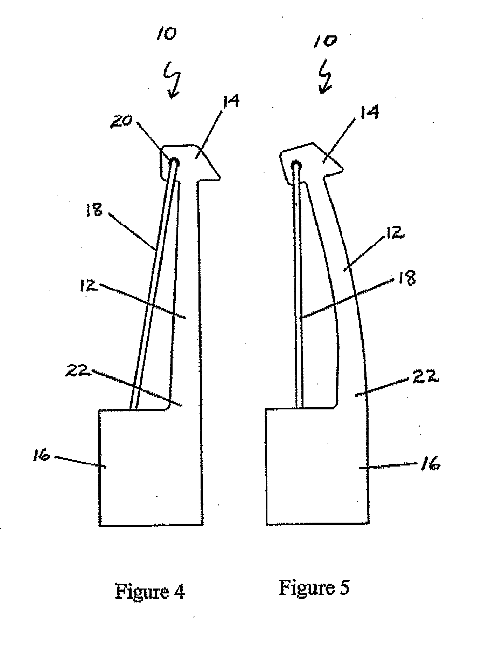

Turning now to Figures 4 and 5, this second embodiment, which also shows the fastener in side elevation, is similar to the first embodiment and the same numbers are used. The difference between the respective embodiments is the thickening of beam 12 at 22 where beam 12 joins block 16. The purpose of this thickening is to strengthen beam 12 to improve the structural and long-term integrity of the fastener.

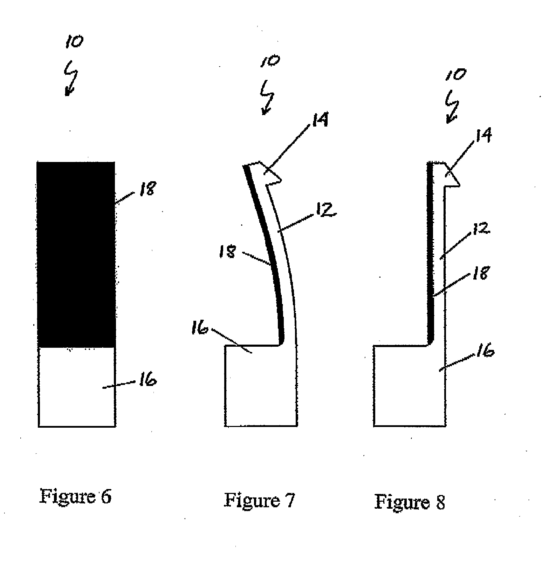

A third embodiment is shown in Figures 6 to 8. Figures 7 and 8 show the fastener in side elevation while Figure 6 is a rear elevation. The same numbers are used for parts having the same function. Fastener 10 includes flexible beam 12 and engagement means 14. However, the actuating means 18, instead of comprising shape memory alloy wire as in the previous embodiments, consists of shape memory alloy coating 18 running along the rear of beam 12.

Fastener 10 is shown in the engagement position, in Figure 8 and in the disengagement position in Figure 7, after contraction of shape memory alloy coating 18.

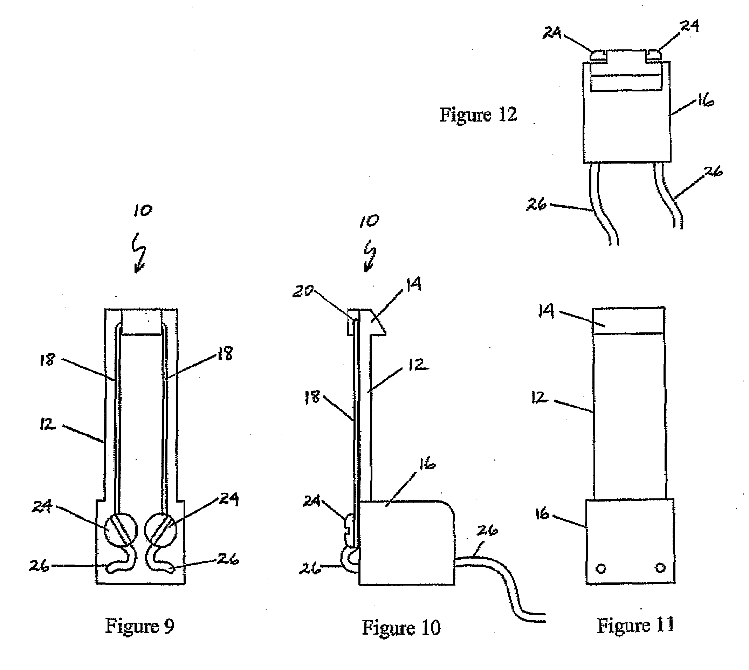

The embodiment in Figures 9 to 12 differs from those in Figures 1 to 3 and 4 to 5 in the manner of attachment of the actuating means. Figure 9 is a rear view, Figure 10 a side elevation, Figure 11 a front view and Figure 12 a top view of fastener 10.

In this embodiment, fastener 10 has flexible beam 12 integral with engagement means 14 and mounting block 16. In contrast to the first embodiment flexible beam 12 is located at the rear of mounting block 16, rather than at the front as in Figures 1 to 3. Shape memory alloy wire 18, made of titanium/nickel, passes through channel 20 in the same way as in the first embodiment. However, wire 18 is held on block 16 by wire attachment screws 24. Power is fed to wire 18 through power cables 26 which emerge from the front of block 16 as shown in Figures 10 and 12. For convenience, power cables 26 have been omitted from the front view in Figure 11.

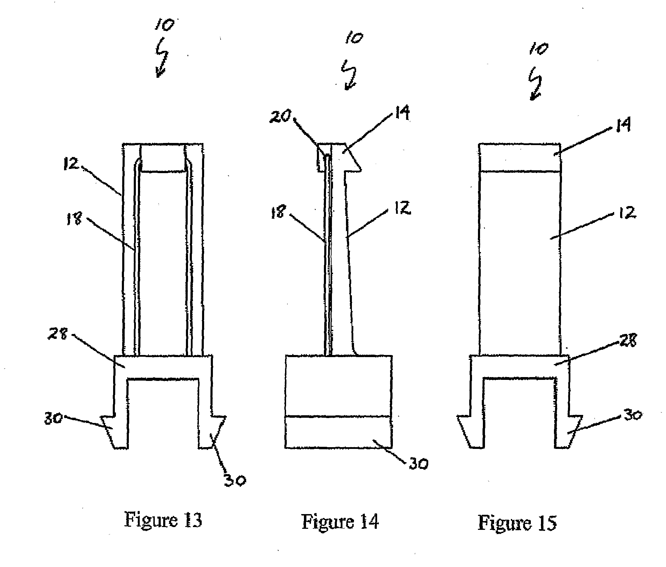

The embodiment in Figures 13 to 15 mainly differs from the previous embodiments in that, instead of mounting block 16, it has a clip style base 28 with flexible locking members 30, designed to snap into a part (not shown). In addition, flexible beam 12 is located approximately in the centre of clip style base 28. Shape memory alloy wire 18 is secured in base 28.

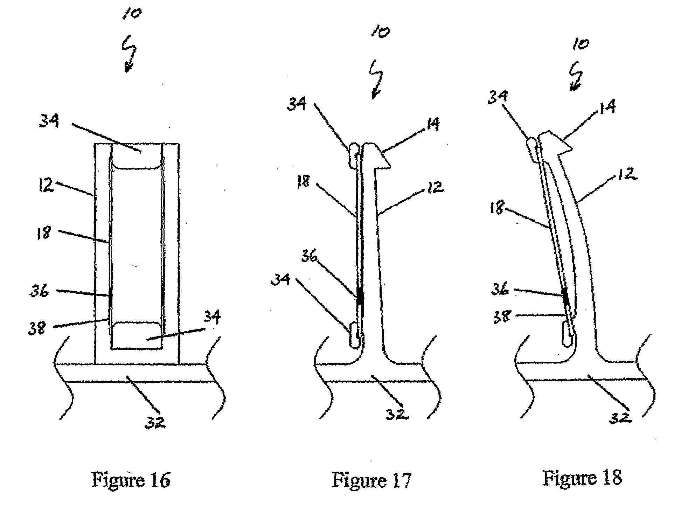

The embodiment in Figures 16 to 18 is moulded integrally with an element for which it is providing the attachment. The element, which is partly shown at 32, may be, for example, part of a plastic casing to hold a mobile phone.

Flexible beam 12 is integral element 32 and can include two hooks 34. Hooks 34 secure shape memory alloy wire 18, which is crimped at 36, to insulating wire, such as nylon wire, 38. Figure 16 shows fastener 10 in rear view, while Figure 17 is a side view in the engagement position and Figure 18 is a side view in the disengagement position.

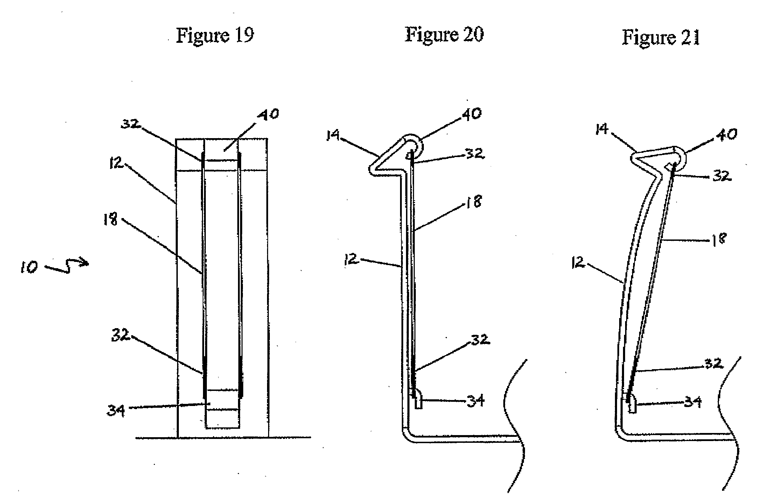

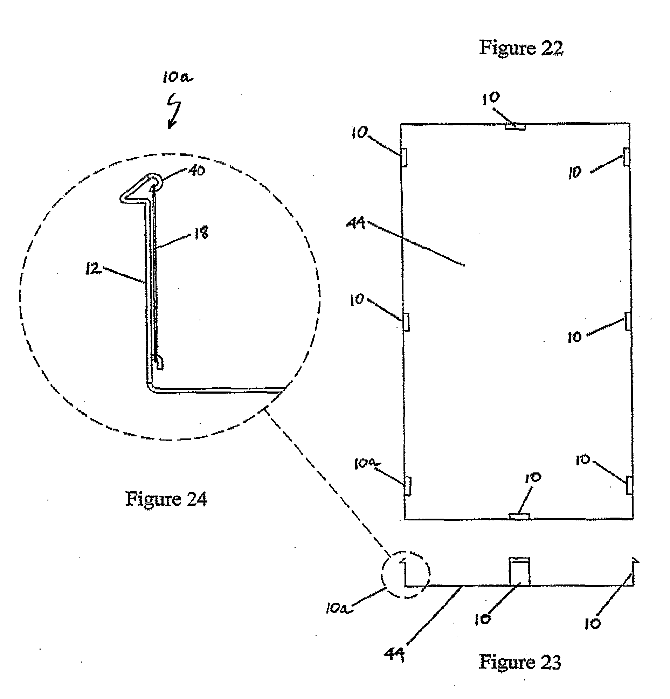

Turning now to Figures 19 to 21, Figure 19 is a rear view and Figures 20 and 21 are side views of the fastener in this embodiment. Fastener 10 has been integrally formed from sheet metal, as will be explained in relation to Figures 22 to 24. Fastener 10 has beam 12, at one end of which is located engagement means 14. At the rear of engagement means 14 is hook 40. Shape memory alloy wire 18 extends from hook 40 to lower hook 34, being suitably insulated at 32. As can be seen from Figure 19, wire 18 forms a loop around hook 40 and 34.

When wire 18 is caused to contract by an electric current (electrical connection not shown), it contracts to bend beam 12 from the engaged position shown in Figure 20 to the disengaged position shown in Figure 21.

Figure 22 is a plan view and Figure 23 a diagrammatic end view of a sheet of metal with which fastener 10 is formed, for example, by stamping. As can-be seen from Figure 22 and as partially shown in Figure 23, there are several fasteners 10 formed in conjunction with sheet 44 and spaced at intervals to enhance listening efficiency.

Figure 24 is an enlarged view of the fastener 10a shown in Figure 23.

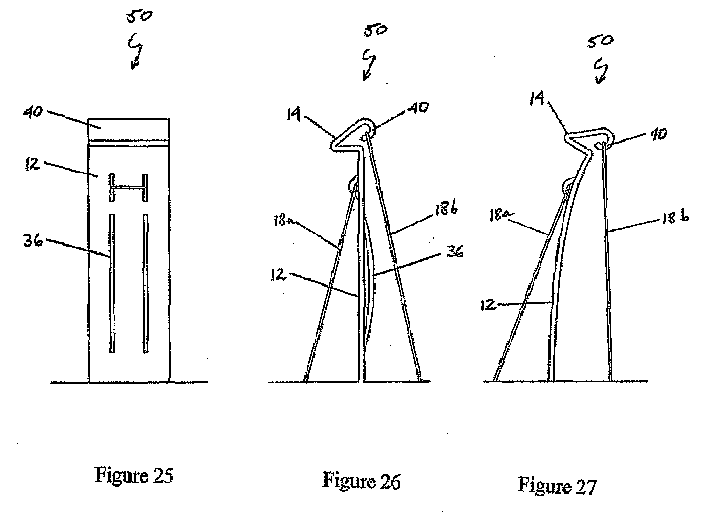

The embodiment in Figures 25 to 27 is a bistable fastener, 50. Figure 25 is a rear view, Figure 26 is a side elevation in the engaged position and Figure 27 is a side elevation in the disengaged position. Like the embodiment in Figures 19 to 21, fastener 50 is formed from sheet metal.

In this embodiment, flexible beam 12 includes integral spring clip 36.

Fastener 50 is bistable with the beam having two stable position. It has two smart memory alloy wires, 18a and 18b. Wire 18a which is shown in the contracted form in Figure 26, moves fastener 50 in the engaged position. Wire 18b, which is shown in the contracted form in Figure 27, moves fastener 50 in the disengaged position. When power is applied to wire 18a, fastener 50 will be engaged. When power is applied to wire 18b, fastener 50 will disengage.

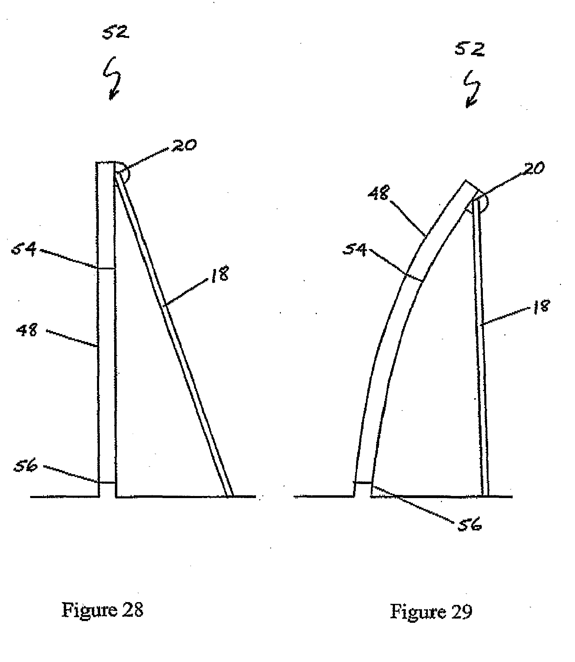

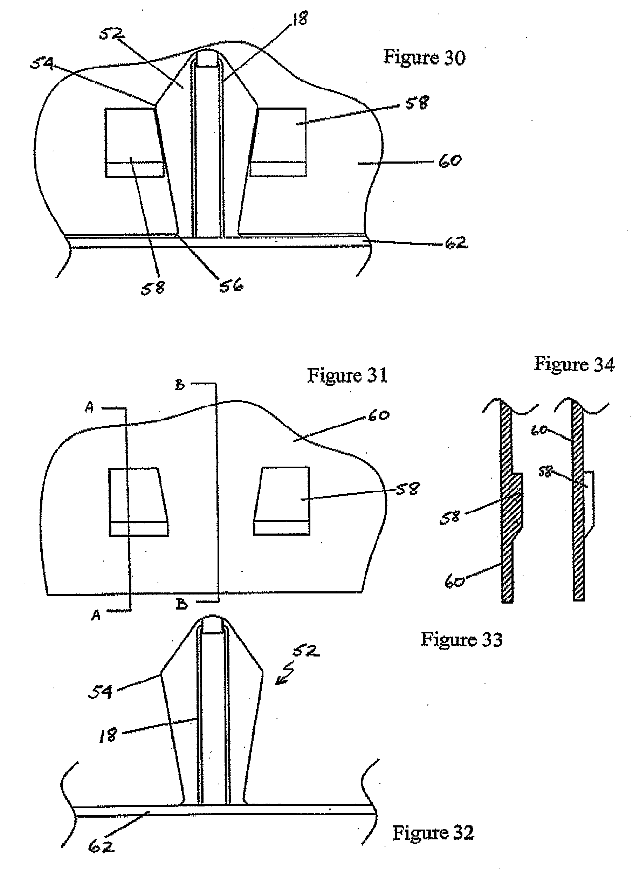

The embodiment in Figures 28 to 34 is a wedge-style fastener 52. Whereas the embodiment in Figures 1 to 3, for example, had a projecting engagement means 14, the embodiment in Figures 28 to 34 engages through co-operation of the wedge shape of the flexible beam with catches shown in Figures 30 and 31.

In this embodiment, fastener 52 has flexible beam 48 which tapers from a wide part 54 to base 56. The shape of the taper between wide part 54 and base 56 is complemented by the shape, of catches 58, as can be seen by Figure 30.

Figure 28 shows fastener 52 in the locked position in side elevation, while Figure 29 is a side elevation showing the unlocked position. Figure 30. is a rear view of fastener 52 engaged with an element 60, fastener 52 being integral or attached to element 62. Figure 31 shows element 60 without fastener 52 in positioned Figure 32 shows fastener 52 attached to element 62, without element 60. Figure 33 is a sectional view taken along the lines A-A in Figure 31. Figure 34 is a sectional view taken along the lines B-B in Figure 31.

In the engaged position as shown in Figure 28, fastener 52 holds element 62. in engagement with element 60, by engagement of fastener 52. with catches 58. As shown in Figure 29, contraction of shape memory alloy wire 18 draws flexible beam 48 out of engagement with catches 58, thus enabling separation of elements 60 and 62.

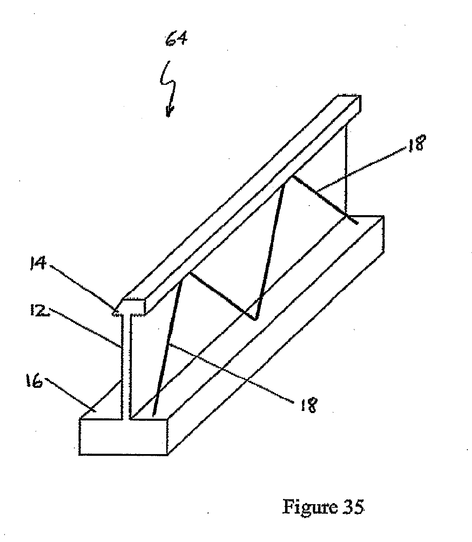

Fastener 64 in Figure 35 is a linearly extending fastener, in contrast to the discrete fasteners in the previous embodiments. Fastener 64 includes flexible beam 12 and engagement means 14, flexible beam 12 being integral with mounting block 16 which in this embodiment both form a strip. Fastener 64 may be any desired length. Shape-memory alloy wire 18 is lashed along the length of fastener 64. Fastener 64 is especially suitable for providing a continuous fastener for a door or window, for example.

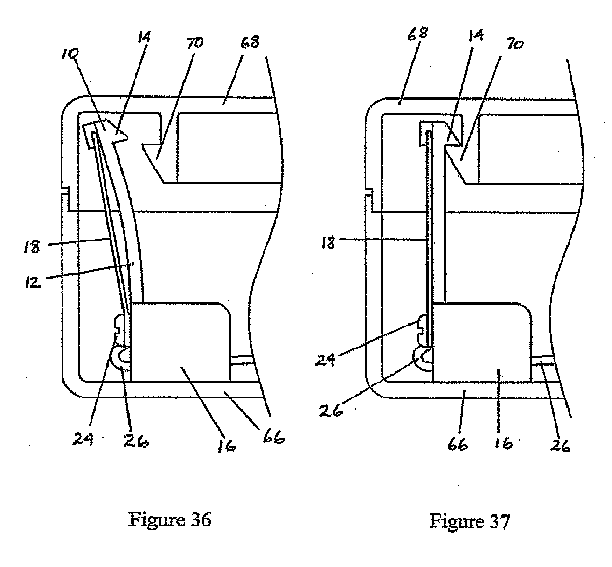

Referring now to Figures 36 and 37, these show fastener 10 of Figures 9 to 12 inside a product. Fastener 10 is shown attached to element 66, being the base of a product case. Fastener 10 is attached by adhesive to base 66. The product case includes lid 68 (the second element) which has integral with it a wedge-shaped catch 70.

As shown in Figure 37, when smart memory alloy wire 18 is in the relaxed state, engagement means 14 hooks onto catch 70 and holds lid 68 in engagement with base 66. When wire 18 is heated sufficiently by electrical current running through power cables 26, wire 18 contracts and withdraws engagement means 14 from catch 70, as shown in Figure 36. Thus lid 68 is released from base 66.

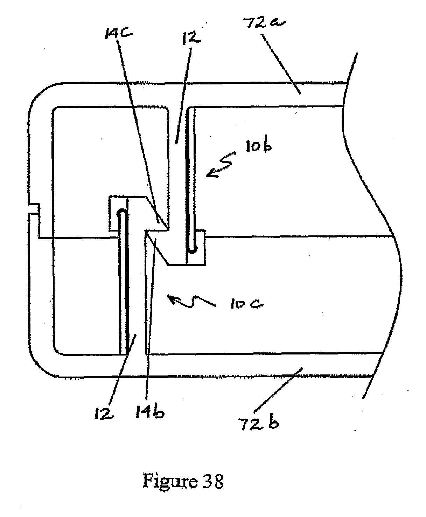

Figure 38 shows a tenth embodiment, in which two fasteners 10 are designed to engage each other. Each fastener 78 is formed integrally with part of a product casing. Fastener 10b is moulded integrally with casing part 72a, while fastener 10c is moulded integrally with casing part 72b. In order to disengage the engagement means 14b and 14c, each fastener needs to deflect only half as much as normal and therefore flexible beams 12 can be made stiffer.

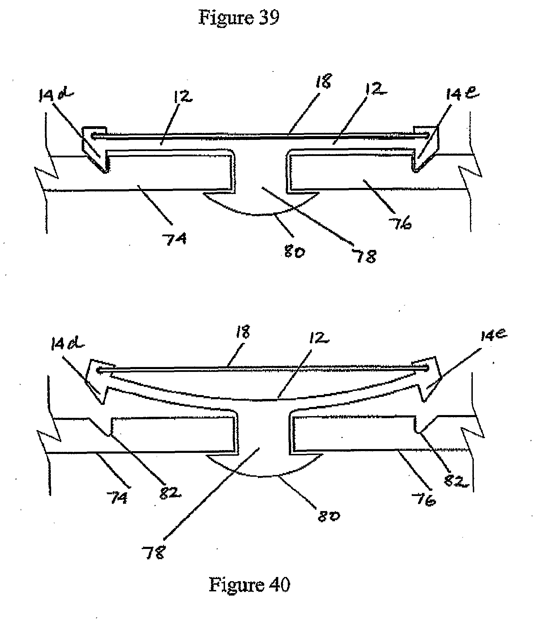

The embodiment in Figures 39 and 40 has a flexible beam 12 with two engagement means 14d and 14e. As shown, fastener 78 is used to hold together two panels, 74 and 76. Fastener 78 is preferably made in strip form so that it extends for substantially the length of panels 74 and 77. Flange 80 serves to disguise the joins between panels 74 and 76.

Figure 39 shows fastener 78 in the engaged position, while Figure 40 shows fastener 78 in the disengaged position, after shape memory alloy wire 18 has been heated sufficiently to contract. Channels 82, into which engagement means 14D and 14E fit in the locked position, can be best seen in Figure 40.

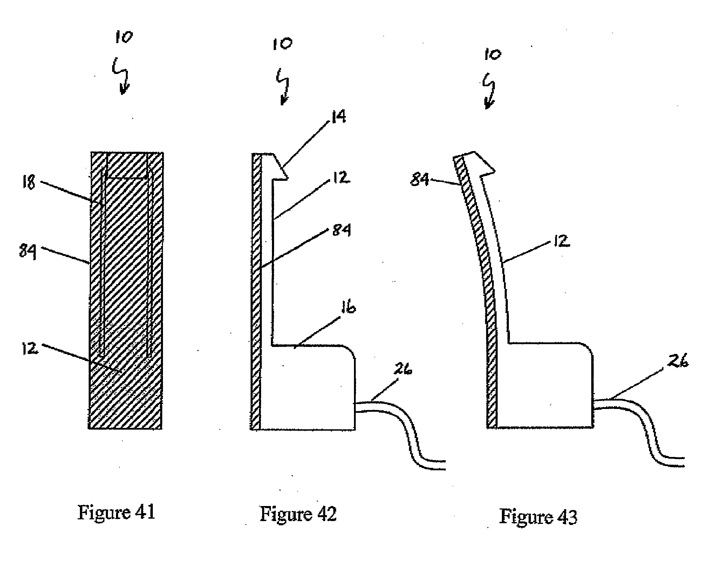

Turning now to Figures 41 to 43, Figure 41 is a rear view and Figures 42 and 43 side elevations of this embodiment, which shows the shape memory wire encapsulated in rubber. Fastener 10 has beam 12 integral with mounting block 16. Power cable 26 is in communication with shape memory alloy wire 18. Shape memory wire 18 and the rear of beam 12 is covered in rubber 84. The rubber covering 84 protects shape memory wire 18 from the environment It also works as a heat sink to cool wire 18 more quickly. In addition, rubber 84 provides a restoration force to beam 12, helping to prevent "creep".

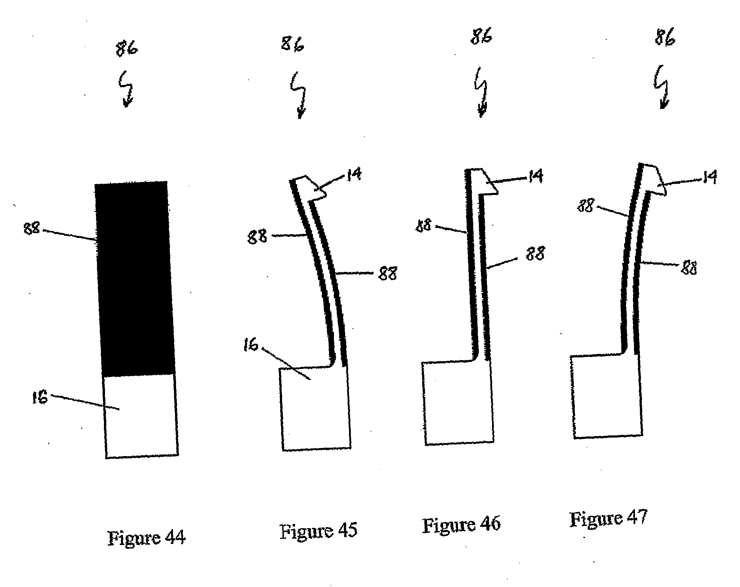

Figures 44 to 47 show an embodiment of a bistable fastener 86. Figure 44 is a rear view, Figure 45 is a side elevation in the disengaged position. Figure 46 is a side elevation in the engaged position and Figure 47 is a side elevation of the fastener showing a slight bias towards the engaged position when the fastener is relaxed. This is to counteract any tendency of fastener 86 to disengage under load.

In this embodiment, rather than using shape memory alloy wire, fastener 86 has a sputter coating 88 of shape memory alloy. This sputter coating is applied both to the front and rear of flexible beam 12, in order to form a bi-stable fastener, When power is applied to the shape memory alloy coating on the rear of beam 12, the coating will contract and the beam will move to the position shown in Figure 45. It will remain in that position until the coating on the front of beam 12 is subject to heat through power, when beam 12 will move towards the position shown in Figure 47. Assuming that engagement means 14 encounters the required engaging surface (not shown), beam 12 will in fact be in the position shown in Figure 46, although being biased towards the position shown in Figure 47,

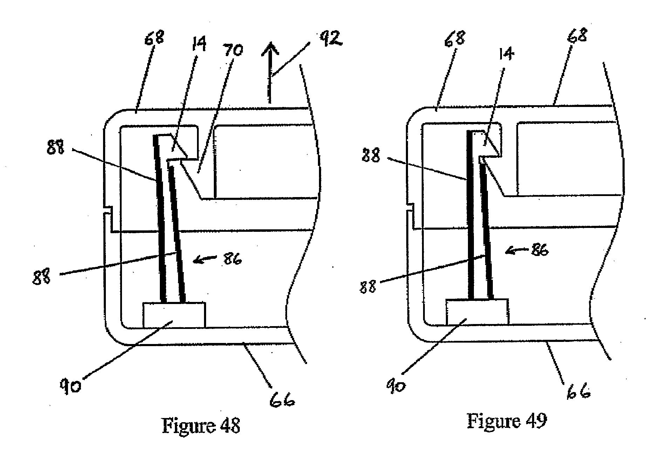

The embodiment in Figures 48 and 49 is similar to that in Figures 44 to 47, in that fastener 86 in Figures 48 and 49 has a shape memory alloy spatter coating on the front and rear of beam 12. However, fastener 86 in the embodiment in Figures 48 and 49 includes sensor 90.

Fastener 86 and sensor 90 are attached to base 66 of a product cover. Engagement means 14 engage with catch 70 which is integral with lid 68. If an attempt is made to force lid 68 away from base 66, engagement means 14 will tend to move off catch 70.

Sensor 90 senses this movement and counteracts it by causing the actuation of smart memory alloy 88 on the front of beam 12 to contract. Thus the tendency of fastener 86 to move to the configuration shown in Figure 48 when an attempt is made to lift lid 68 in the direction of arrow 92 is resisted and fastener 86 moves to the securely engaged position shown in Figure 49.

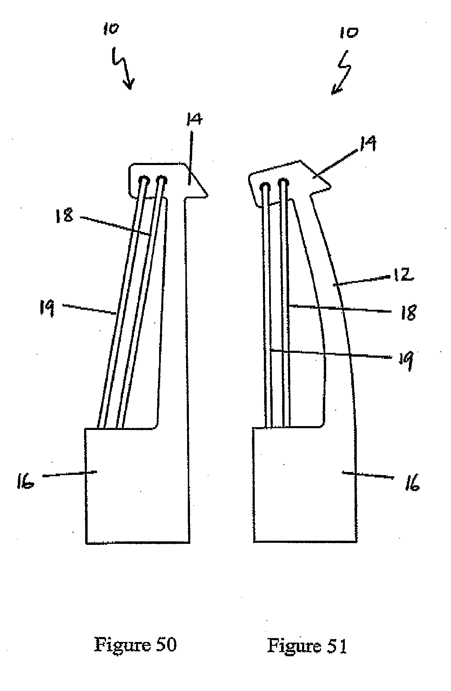

The embodiment in Figures 50 and 51 has a redundant actuation mechanism. Fastener 10 has two shape memory wires 18 and 19. Either wire 18 or 19 can move beam 12 to the disengaged position, If wire 18 fails, wire 19 can be activated so that the fastener 10 can still operate,

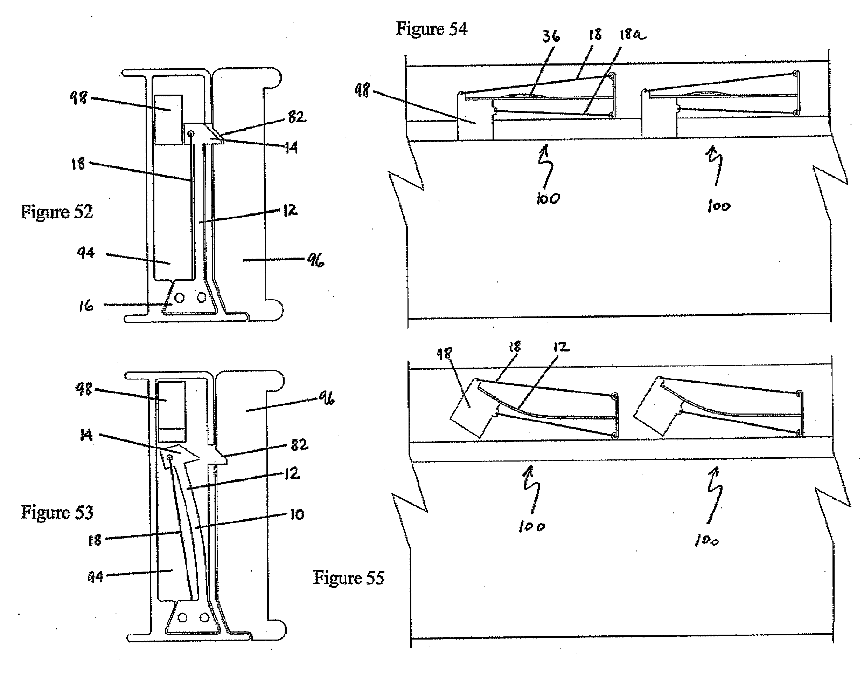

Figures 52 to 55 show an embodiment where the fastener of the invention is used to engage a door and the assembly has the facility to lock the fastener into position. The locking arrangement can be supplied by an embodiment of the fastener of the invention.

Figures 52 and 53 are sectional views through a door jamb 94 with Figure 52 showing the fastener in the engaged and locked position and Figure 53 showing the fastener in the disengaged and unlocked position. Figure 54 is a longitudinal section, showing an embodiment of the fastener acting as a locking block.

In Figure 52, fastener 10 is located in jamb 94. Engagement means 14 engaged channel 82. Channel 82 extends for substantially the length of door 96. Fastener 10 extends linearly, in a similar way, so as to make continuous contact with channel 82.

In the engaged position shown in Figure 52, locking block 98 has been moved into position behind engagement means 14. In this configuration, even if wire 18 is activated to contract, engagement means 14 cannot be pulled out of channel 82, because of physical contact with locking block 98.

In order to release door 96, it is necessary to first withdraw locking block 98 as shown ' in Figure 53 so that contraction of wire 18 can move beam 12 and engagement means 14, so that channel 82 is cleared.

It will be appreciated that locking takes place at the edge of door 96 and tha the locking mechanism is hidden, enhancing security.

Locking block 98 is in fact the engagement means in a bistable fastener 100, which has an integrated clip 36, similar to the embodiment in Figures 25 to 27. Figure 54 shows locking block 98 in the locked position, as in Figure 52.

When wire 18 is activated as shown in Figure 55, block 98 is pulled out of engagement with engaging means 14 and door 96 can accordingly open.

Because fastener 100 is bistable, it will remain in the position shown in Figure 55 until wire 18a is activated in order to again lock block 98.

In the embodiment shown, fasteners 100 are discrete rather than linearly extending, since it is not necessary to lock the whole length of engagement means 14.

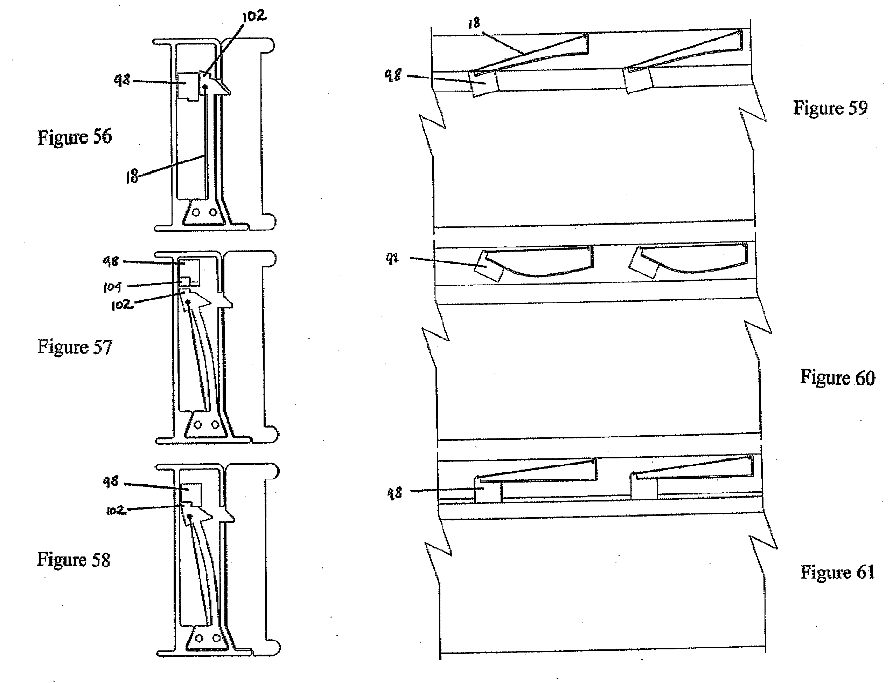

The arrangement in Figures 56 to 61 is similar in some respects to that in the previous embodiment. However, in Figures 56 to 61, locking block 98 is capable of assuming three positions. The first is the locked position shown in Figure 56. The second is the unlocked position shown in Figure 57 and the third, as shown in Figure 58, is a position in which locking block 98 locks engaging means 14. Engaging means 14 has for this purpose a projection 102 which is engaged by a cutaway 104 on locking block 98 for this purpose.

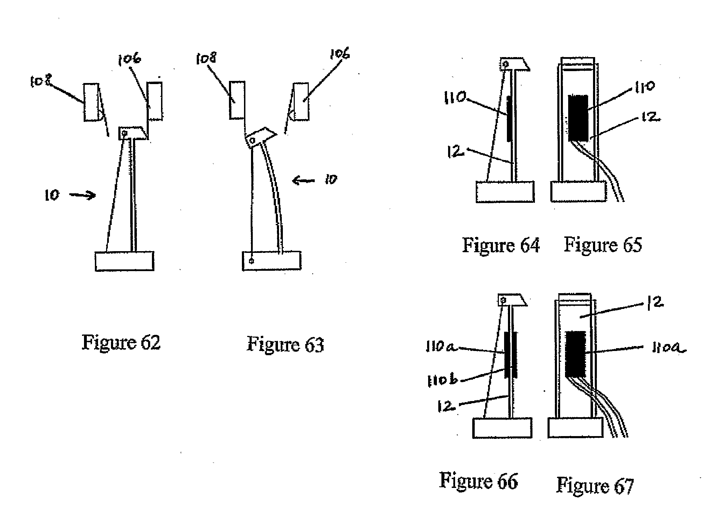

Figures 62 and 63 show how the engaged or disengaged state of a fastener may be sensed by limit switches. When fastener 10 is in the engaged state shown in Figure 62, limit switch 106 is turned on. When fastener 10 is in the disengaged position, as shown in Figure 63, limit switch 108 is turned on and switch 106 is off.

Figures 64 and 65 illustrate the use of a single strain gauge to sense and fastener position. Strain gauge 110 is attached to the back of beam 12 (Figure 64 being a side elevation and Figure 65 being a rear view). Strain gauge 110 permits the position of the beam 12 to be determined with high resolution throughout its travel, typically 256 steps or more.

The embodiment in Figures 66 and 67 is similar, except that two strain gauges are used, 10a and 110b. Differential measurement between the strain gauges allows the position of beam 12 to be determined throughout its travel, with high resolution. Common mode measurement allows linear extension or compression of the fastener to be measured, and hence axial loading on the fastener to be determined.

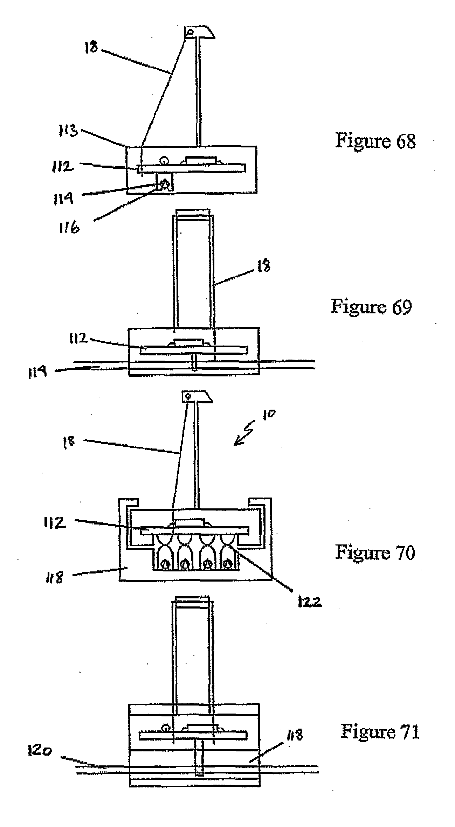

In Figures 68 to 71, the size of the base to the fastener has been exaggerated for clarity of detail. These Figures show packaging and integration of intelligent farms of the fastener of the invention. While the fasteners used in these and the remaining Figures may be shown as the fasteners of the first aspect of the invention, the fastener of the second aspect of the invention may be substituted.

Figures 68 and 69 show a design in which wire 18 is attached to circuit board 112 and to a conductive base 113 for earth return connection. A single wire 114 carries power and superimposed communications and makes connection via an insulation displacement connector 116.

In the embodiment in Figures 70 and 71, fastener 10 clips into base 118. Wire 18 connects to printed circuit board 112, in this case integrated into fastener 10, Base 118 accommodates a four-way ribbon cable 120 which runs through base 118 and which is crimped into place. Cable 120 carried power and communication, with connection to fastener 10 by electrical contacts 122.

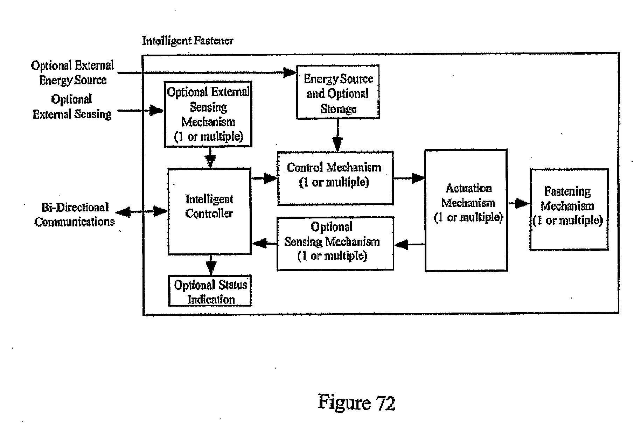

Figure 72 is a block diagram of an intelligent fastener configuration, applicable to either aspect of the fastener of the invention. It is self-explanatory.

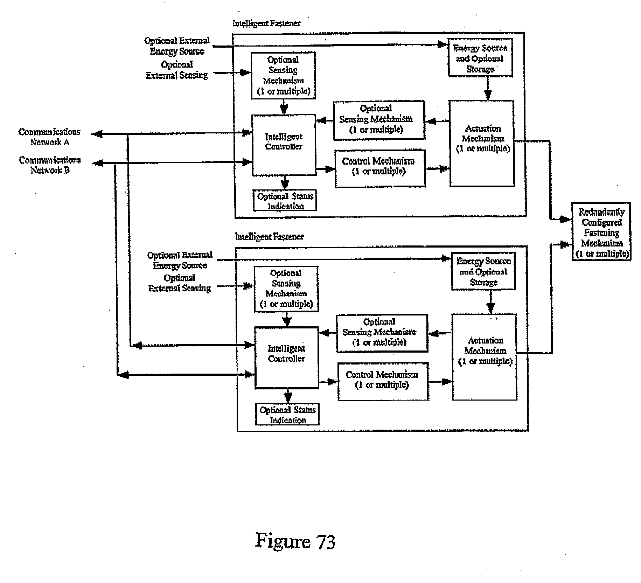

Figure 73 is a block diagram representing a system for control of one or more redundant fasteners. Two intelligent controllers, each linked by two independent communication links, can individually control each fastener. In this way, full functionality can be maintained even in the event of failure of either a controller or a communications channel.

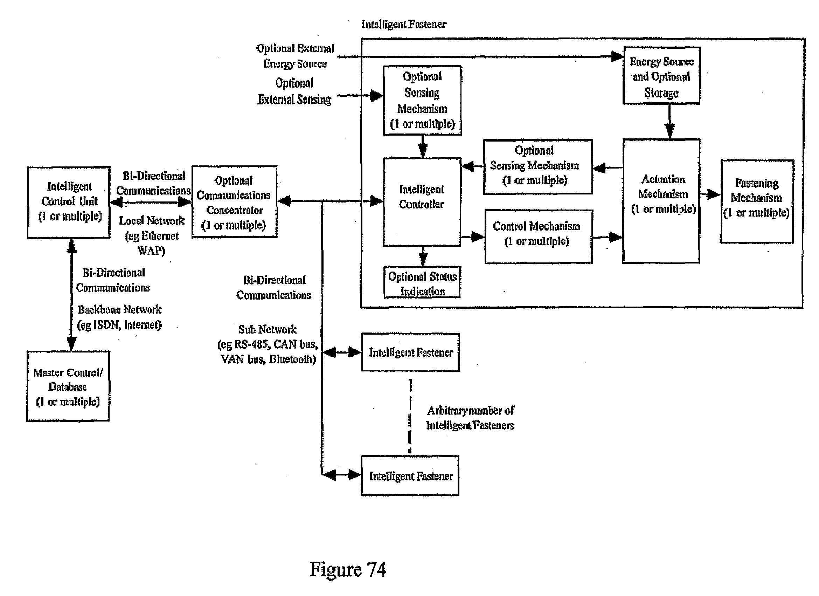

The block diagram in Figure 74 represents a system of fasteners. Each intelligent fastener is as shown in Figure 72. The communications concentrator, which is an optional element, provides a mechanism for partitioning system complexity, eg, by providing an interface between a relatively costly-to-implement radio frequency network and an inexpensive RS-485 network which interconnects a number of the fasteners via a subnetwork. The subnetwork may use any communications which may also be useful for the intelligent fastener, such as uni-directional, bi-directional, full duplex, half duplex, simple, point-to-point, network, asynchronous and synchronous, via such techniques as electromagnetic radiation, radio (AM or FM), magnetic coupling, low frequency RF, microwave radio, spread spectrum radio, light (visible, infrared), optical fibre, electrical (wire, cable) or sonic (ultrasonic, audible or infra-sound).

The intelligent control unit may be a discrete device, an integrated circuit, a microcontroller, a microcomputer, a programmable logic device, a hybrid integrated circuit an application specific integrated circuit, a printed wiring assembly or an embedded PC.

The optional sensing mechanism may be binary, multi-state or linear and operate by any of the following techniques: electrical (switch, contact, strain gauge, piezo-electric, piezo-resistive, magneto-resistive, resistive), magnetic/Hall effect, capacitive, optical acoustic/ultrasonic or mechanical.

The status indication may be optical, acoustic or mechanical.

The control mechanism may also be binary, multi-state or linear. It may operate by techniques such as electrical (swirch, relay/contactor, semiconductor, transistor, FET, thyristor, mechanical (lever, valve, piston) or biological (human or animal).

The energy source and optional storage may be local, external or a combination, using a technique such as primary or secondary cell or battery mains derived power, capacitor or supercapacitor, electromagnetic radiation (RF or light), inductive coupling, acoustic, chemical, fuel cell, gravity, mechanical, kinetic or biological.

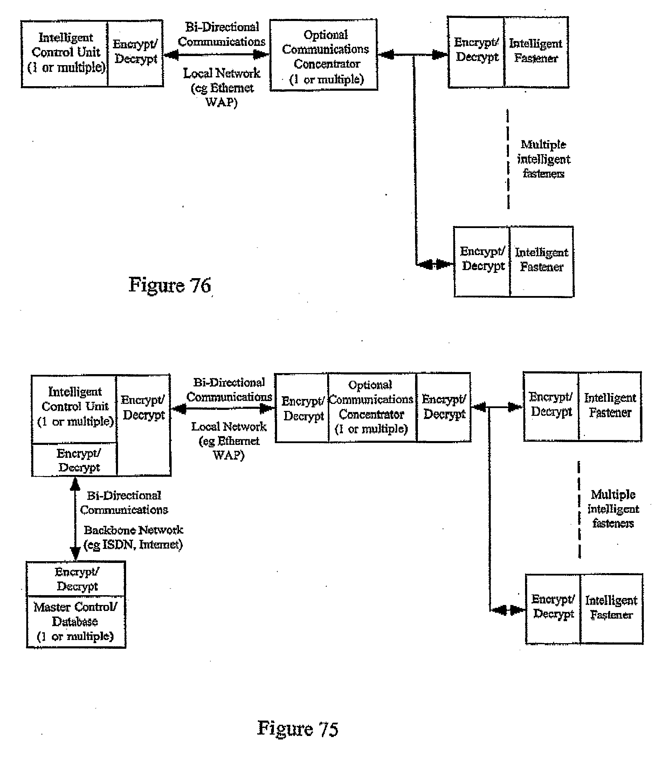

Turning now to Figure 75, this illustrates a form of link encryption, in which each communications link where the information (address data) may be intercepted is protected by encryption of information on that link.

Figure 76 shows a form of end-t-end encryption, where information is encrypted at its source and decrypted at its destination.

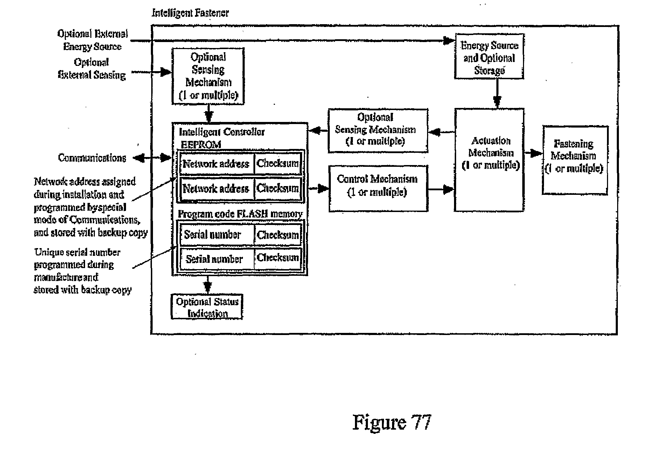

Figure 77 shows storage of a unique identity for a fastener, using a microcontroller-based intelligent controller which incorporates internal program code memory programmed with a unique serial number during manufacture. Also included is an EEPROM which stores a network address programmed as part of installation and commissioning. Each of these is stored redundantly with checksum protection.

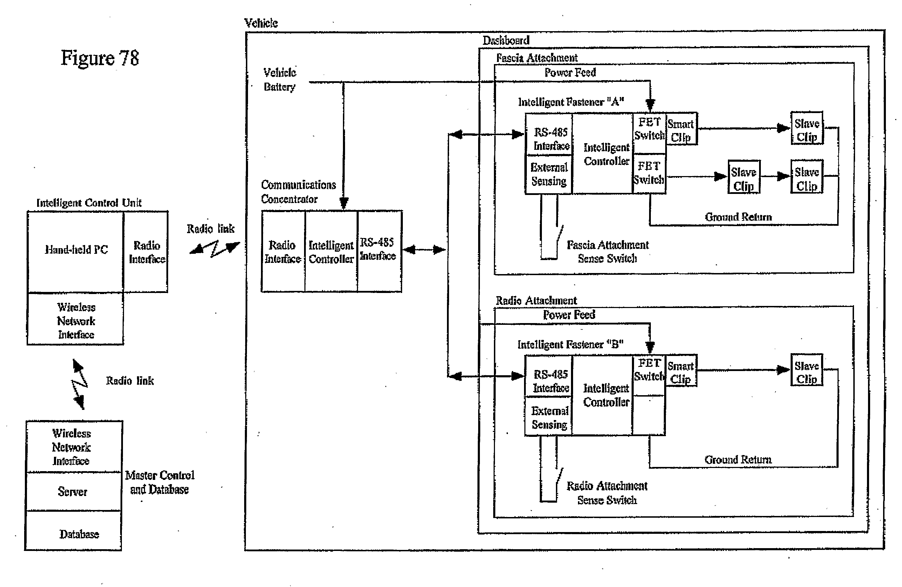

The block diagram in Figure 78 embodies many of the concepts of the invention. The system shown consists of a fastening system for a car radio which is housed behind a fascia which must be removed before the radio can be removed or installed.

The fascia and radio are each retained by multiple fasteners similar to those shown in the early embodiments, above. The fascia is retained by intelligent fastener A which controls three "slave" fasteners wired in series/parallel combination. The radio is retained by intelligent fastener B which controls one slave fastener wired in series with the fastener. The intelligent fasteners have external sensing switches to determine whether or not the item attached by the fastener is in place. Power for fastener electronics and actuators is derived from the vehicle electrical system.

The handheld PC in the intelligent control unit runs custom software and the unit can report the installation or otherwise of the radio and fascia and can guide the operator through a step-by-step installation procedure.

The database in the master control unit may contain records relating to vehicles being serviced by the system.

### Industrial Applicability

As the above description amply demonstrates, the invention in its various aspects represents a major advance in the art and is readily applicable industrially.

Alternative expressions of the inventive concept are set out in each of the following clauses:
Clauses
   1. A fastener which includes:
      (a) a fastening element having a flexible beam and an engagement means; and
      (b) actuating means attached to the fastening element and including a material adapted to contract when activated;
      wherein the beam is moveable, upon contraction of the material, between an engagement position and a disengagement position.
2. The fastener of clause 1 in which the beam is made of plastic or metal.
3. The fastener of clause 1 or 2 wherein the engagement means is a wedge projecting from the beam, a rod or an aperture.
4. The fastener of any one of clauses 1 to 3 wherein the beam and engagement means are integral with the fastening element.
5. The fastener as claimed in any one of clauses 1 to 4, wherein the material adapted to contract when activated is chosen from the group: shape memory wire, shape memory strip and shape memory alloy in sputter form.
6. The fastener claimed in clause 5 wherein the material is a shape memory alloy or a shape memory strip and comprises the actuating means, attached to the fastening element near the engagement means.
7. The fastener claimed in clause 5 or 6, wherein the shape memory alloy is wholly or substantially a titanium-nickel alloy.
8. The fastener claimed in anyone of clauses 1 to 7, which includes insulating means around the actuating means.
9. The fastener claimed in any one of clauses 1 to 7, which includes a heat sink material on or around the actuating means.
10. The fastener claimed in any one of clauses 1 to 9, which includes two of the actuating means attached to the fastening element.
11. The fastener claimed in clause 10, in which the two actuating means are substantially parallel to each other.
12. The fastener of clause 10 wherein one of the actuating means is adapted to cause the beam to move to the disengagement position and the other actuating means is adapted to cause the beam to move to the engagement position.
13. The fastener of any one of clauses 10 to 12, which includes one or more switches for the actuating means.
14. The fastener of any one of clauses 1 to 13, which includes means to lock the fastener in the engagement position or in the disengagement position.
15. The fastener claimed in any one of clauses 1 to 14, wherein the material is adapted to contract when heated by application of an electric current.
16. The fastener claimed in clause 1, wherein the engagement means and flexible beam form a linearly extending strip.
17. The fastener claimed in clause 1, which is integral with a first element, the fastener being adapted in use to fasten the first element to a second element.
18. The fastener claimed in clause 1, where the engagement means comprises a broadened part of the flexible beam.
19. The fastener of any one of clauses 1 to 18, wherein the fastener includes address means.
20. The fastener claimed in clause 19, wherein the fastener includes sensing means.
21. A fastener for use in a network of fasteners, the fastener including an address means to distinguish the fastener from the other fasteners in the network.
22. The fastener of clause 21 which is the fastener of clause 19 or 20.
23. The fastener of clause 21 which includes an actuating means chosen from the group: magnetic (linear solenoid), magnetic (rotary solenoid), magnetic (linear actuator), magnetic (motor), piezo-electric, electrostatic, thermal (shape memory alloy), thermal (bimetallic), thermal (state change), pneumatic, hydraulic, chemical, pyrotechnic or explosive, acoustic or ultrasonic, ionising radiation, ionising particles, luminescent and gravitational.
24. The fastener claimed in any one of clauses 21 to 23, wherein the address means is chosen from the group: a serial number, a communications address, a temporary communications address and a combination of any two or all of the foregoing.
25. The fastener claimed in clause 24, wherein the address means is stored on the fastener by a storage means chosen from the group: hard wiring, non-volatile memory and semiconductor.
26. The fastener of any one of clauses 21 to 25, wherein the address means includes encryption of the address.
27. The fastener claimed in clause 26 wherein encryption is by link encryption, end-to-end encryption or both.
28. A system including a plurality of fasteners of any one of clauses 20 to 27.
29. The system of clause 28, which includes one or more information processing means.
30. The system of clause 28, which includes one or more switching means.
31. The system of any one of clauses 28 to 30, which includes one or more control means, one or more sensors, an energy source, an intelligent control device and a status indicator.
32. A network including a plurality of systems as claimed in any one of clauses 28 to 31, at least one communications concentrator, at least one intelligent control unit and at least one master control/database unit.
33. In a process for producing product, the process including a plurality of steps in which a first element is releasably fixed to a second element, the use of the fastener claimed in any one of clauses 1 to 27, to releasably fix/the first element and the second element.
34. A computer system programmed to perform the profess of clause 33.
35. A fastener substantially as herein described with reference to any of the accompanying drawings.
36. A system substantially as herein described with reference to any of the drawings thereof.
37. A network substantially s herein described with reference to any of the drawings thereof.

## Claims

1. A fastener for use in a network of fasteners, the fastener including an address means to distinguish the fastener from the other fasteners in the network.

2. The fastener of Claim 1 which includes an actuating means chosen from the group: magnetic (linear solenoid), magnetic (rotary solenoid), magnetic (linear actuator), magnetic (motor), piezo-electric, electrostatic, thermal (shape memory alloy), thermal (bimetallic), thermal (state change), pneumatic, hydraulic, chemical, pyrotechnic or explosive, acoustic or ultrasonic, ionising radiation, ionising particles, luminescent and gravitational.

3. The fastener claimed in Claim 1 or 2, wherein the address means is chosen from the group: a serial number, a communications address, a temporary communications address and a combination of any two or all of the foregoing.

4. The fastener claimed in Claim 3, wherein the address means is stored one the fastener by a storage means chosen from the group: hard wiring non-volatile memory and semiconductor.

5. The fastener of any one of Claims 1 to 4, wherein the address means includes encryption of the address.

6. The fastener claimed in Claim 5 wherein encryption is by link encryption, end-to-end encryption or both.

7. The fastener of any one of claims 1 to 6 which includes:
(a) a fastening element having a flexible beam and an engagement means; and
(b) actuating means attached to the fastening element and including a material adapted to contract when activated;
wherein the beam is moveable, upon contraction of the material, between an engagement position and a disengagement position.

8. The fastener of Claim 7 which includes means to lock the fastener in the engagement position or in the disengagement position.

9. A system including a plurality of fasteners of any one of Claims 1 to 6

10. The system of Claim 9 which includes one or more information processing means.

11. The system of Claim 9 which includes one or more switching means.

12. The system of any one of Claims 9 to 11, which includes one or more control means, one or more sensors, an energy source, an intelligent control device and a status indicator.

13. A network including a plurality of systems as claimed in any one of Claims 9 to 12, at least one communications concentrator, at one intelligent control unit and at least one master control/database unit.

14. In a process for producing product, the process including a plurality of steps in which a first element, is releasably fixed to a second element the use of the fastener claimed in any one of Claims 1 to 8 to releasably fix/the first element and the second element.

15. A computer system programmed to perform the process of Claim 14.
